# EUROPEAN PATENT SPECIFICATION

(11) **EP 4 093 131 B1**
(45) Date of publication and mention of the grant of the patent: **24.09.2025**
(21) Application number: 21753238.1
(22) Date of filing: 09.02.2021
(51) Int. Cl.: H04W 72/563, H04L 5/00, H04W 72/21, H04W 72/0446, H04W 72/1268, H04L 1/1867

(54) **PRIORITIZATION METHOD AND DEVICE FOR PLURALITY OF COLLISION RESOURCES**
VERFAHREN UND VORRICHTUNG ZUR PRIORISIERUNG FÜR MEHRERE KOLLISIONSRESSOURCEN
PROCÉDÉ ET DISPOSITIF DE PRIORISATION POUR UNE PLURALITÉ DE RESSOURCES DE COLLISION

(30) Priority: 12.02.2020 KR 20200017007; 13.02.2020 KR 20200017867; 02.03.2020 KR 20200025958
(43) Date of publication of application: 23.11.2022
(73) Proprietor: Samsung Electronics Co., Ltd., Suwon-si, Gyeonggi-do 16677 (KR)
(72) Inventor: BAEK, Sangkyu, Suwon-si, Gyeonggi-do 16677 (KR); PARK, Sungjin, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2021/001713
(87) International publication number: WO 2021/162412

(56) References cited:
- US-A1- 2019 261 361
- US-A1- 2019 306 922
- QUALCOMM INCORPORATED: "Intra-UE prioritization framework and RAN1 impacts", vol. RAN WG2, no. Prague, Czech Republic; 20190826 - 20190830, 16 August 2019 (2019-08-16), XP051768504, Retrieved from the Internet <URL:http://www.3gpp.org/ftp/tsg_ran/WG2_RL2/TSGR2_107/Docs/R2-1910736.zip> [retrieved on 20190816]
- NTT DOCOMO ET AL: "Report for email discussion [106#53][IIOT] Handling of overlapping PUSCH grant prioritization", vol. RAN WG2, no. Prague, Czech Republic; 20190826 - 20190830, 16 August 2019 (2019-08-16), XP051769228, Retrieved from the Internet <URL:http://www.3gpp.org/ftp/tsg_ran/WG2_RL2/TSGR2_107/Docs/R2-1911472.zip> [retrieved on 20190816]
- CATT: "Data/data prioritization", vol. RAN WG2, no. Chongqing, P. R. China; 20191014 - 20191018, 3 October 2019 (2019-10-03), XP051803802, Retrieved from the Internet <URL:https://ftp.3gpp.org/tsg_ran/WG2_RL2/TSGR2_107bis/Docs/R2-1912211.zip R2-1912211 data-data prioritization - final.docx> [retrieved on 20191003]
- SAMSUNG: "TP for LCH-priority based Data-Data and SR-Data prioritization", 3GPP DRAFT; R2-1916526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 23 November 2019 (2019-11-23), Mobile Competence Centre ; 650, route des Lucioles ; F-06921 Sophia-Antipolis Cedex ; France, XP051828998
- SAMSUNG: "Priority Value of an Uplink Grant", 3GPP DRAFT; R2-1915342, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 8 November 2019 (2019-11-08), Mobile Competence Centre ; 650, route des Lucioles ; F-06921 Sophia-Antipolis Cedex ; France, XP051817176
- ERICSSON: "Intra-UE control-data prioritization – SR over PUSCH", 3GPP DRAFT; R2-1912557 INTRA-UE CONTROL-DATA PRIORITIZATION - SR OVER PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 3 October 2019 (2019-10-03), Mobile Competence Centre ; 650, route des Lucioles ; F-06921 Sophia-Antipolis Cedex ; France, XP051790598

## Description

### TECHNICAL FIELD

The disclosure relates to a prioritization method and user equipment for a plurality of colliding resources in a wireless communication system.

### BACKGROUND ART

To meet increasing demand with respect to wireless data traffic after the commercialization of 4^{th} generation (4G) communication systems, efforts have been made to develop 5^{th} generation (5G) or pre-5G communication systems. For this reason, 5G or pre-5G communication systems are called 'beyond 4G network' communication systems or 'post long term evolution (post-LTE)' systems. To achieve high data rates, implementation of 5G communication systems in an ultra-high frequency or millimeter-wave (mmWave) band (e.g., a 60-GHz band) is being considered. To reduce path loss and increase coverage of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are being studied. To improve system networks for 5G communication systems, various technologies such as evolved small cells, advanced small cells, cloud radio access networks (cloud RAN), ultra-dense networks, device-to-device (D2D) communication, wireless backhaul, moving networks, cooperative communication, coordinated multi-points (CoMP), and received-interference cancellation have been developed. In addition, for 5G systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA), have been developed.

The Internet has evolved from a human-based connection network, where humans create and consume information, to the Internet of things (IoT), where distributed elements such as objects exchange information with each other to process the information. Internet of everything (IoE) technology has emerged, in which the IoT technology is combined with, for example, technology for processing big data through connection with a cloud server. To implement the IoT, various technological elements such as sensing technology, wired/wireless communication and network infrastructures, service interface technology, and security technology are required and, in recent years, technologies related to sensor networks, machine-to-machine (M2M) communication, and machine-type communication (MTC) for connecting objects have been studied. In the IoT environment, intelligent Internet technology (IT) services may be provided to collect and analyze data obtained from connected objects to create new value in human life. As existing information technology (IT) and various industries converge and combine with each other, the IoT may be applied to various fields such as smart homes, smart buildings, smart cities, smart cars or connected cars, smart grids, health care, smart home appliances, and advanced medical services.

Various attempts are being made to apply 5G communication systems to the IoT network. For example, technologies related to sensor networks, M2M communication, and MTC communication are being implemented by using 5G communication technology including beamforming, MIMO, and array antennas. Application of a cloud RAN as the above-described big data processing technology may be an example of convergence of 5G communication technology and IoT technology.

Because a variety of services are providable due to the development of wireless communication systems as described above, a method for seamlessly providing services through prioritization of a plurality of colliding resources in a wireless communication system is required.

QUALCOMM INCORPORATED, 3GPP DRAFT, R2-1910736, 16 August 2019, is a document for discussion titled "Intra-UE prioritization framework and RAN1 impacts" about enhancements to address resource conflicts between dynamic grant (DG) and configured grant (CG) PUSCH and conflicts involving multiple CGs.

NTT DOCOMO ET AL, 3GPP DRAFT, 16 August 2019, R2-1911472, is a document for discussion and decision titled "Report for email discussion [106#53][IIOT] Handling of overlapping PUSCH grant prioritization", referring to an email discussion about handling of overlapping PUSCH grant prioritization.

CATT, 3GPP DRAFT, R2-1912211, 3 October 2019, is a document for discussion and decision titled "Data/data prioritization" about specifying enhancements to address resource conflicts between dynamic grant (DG) and configured grant (CG) PUSCH and conflicts involving multiple CGs.

### DESCRIPTION OF EMBODIMENTS

### TECHNICAL PROBLEM

The disclosure provides a user equipment and method capable of effectively supporting services in a wireless communication system.

### SOLUTION TO PROBLEM

The invention is set out in the appended set of claims. Any embodiment, example, aspect or implementation not being part of the claims, is only presented as information.

### BRIEF DESCRIPTION OF DRAWINGS

FIG. 1 is a diagram showing a scenario in which a plurality of uplink radio resources overlap, according to an embodiment of the disclosure.
FIG. 2 is a diagram showing a scenario in which a scheduling request (SR) and an uplink radio resource overlap, according to an embodiment of the disclosure.
FIG. 3 is a diagram showing a scenario in which uplink resources overlap, according to an embodiment of the disclosure, and problems of a related technology.
FIG. 4 is a diagram showing a scenario in which uplink resources overlap, according to an embodiment of the disclosure, and problems of a related technology.
FIG. 5 is a flowchart of a prioritization process according to an embodiment of the disclosure.
FIG. 6 is a flowchart of a prioritization process according to an embodiment of the disclosure.
FIG. 7 is a flowchart of a prioritization process according to an embodiment of the disclosure.
FIG. 8 is a flowchart of a prioritization process according to an embodiment of the disclosure.
FIG. 9 is a block diagram of a user equipment (UE) according to an embodiment of the disclosure.
FIG. 10 is a block diagram of a base station according to an embodiment of the disclosure.
FIG. 11 is a flowchart of a prioritization process according to an embodiment of the disclosure.
FIG. 12 is a flowchart of a prioritization process according to an embodiment of the disclosure.

### MODE OF DISCLOSURE

In the following description of the disclosure, a detailed description of known functions or configurations incorporated herein will be omitted when it may make the subject matter of the disclosure unclear. The terms used below are defined considering functions in the disclosure, and may be changed according to the customs or the intents of users or operators. Accordingly, definitions of the terms are understood on the basis of the entire description of this specification. In the following description, terms identifying access nodes, terms indicating network entities, terms indicating messages, terms indicating interfaces between network entities, terms indicating various types of identification information, etc. are merely selected for convenience of explanation. Therefore, the disclosure is not limited to these terms and other terms having technically equivalent meanings may also be used.

As used herein, a base station is an entity for allocating resources to terminals and may include at least one of a gNode B (gNB), an eNode B (eNB), a Node B (NB), a base station (BS), a radio access unit, a base station controller, or a node on a network. A terminal may include a user equipment (UE), a mobile station (MS), a cellular phone, a smartphone, a computer, or a multimedia system capable of performing communication functions. The term "terminal" may also indicate a mobile phone, NB-IoT devices, sensors, and other wireless communication devices. However, the base station and the terminal are not limited to the above examples.

To facilitate explanation, the disclosure uses terms and names defined in the 3^{rd} Generation Partnership Project (3GPP) long term evolution (LTE) standards and/or the 3GPP new radio (NR) standards. However, the disclosure is not limited to these terms and names.

Although LTE, LTE-advanced (LTE-A), LTE Pro, or 5G (or NR) systems are mentioned as examples below, the embodiments of the disclosure may also be applied to other communication systems having similar technical backgrounds or channel types. Furthermore, the embodiments of the disclosure may also be applied to the other communication systems through partial modification without significantly departing from the scope of the disclosure based on determination by one of ordinary skill in the art. Hereinafter, the disclosure will be described in detail by explaining embodiments of the disclosure with reference to the attached drawings.

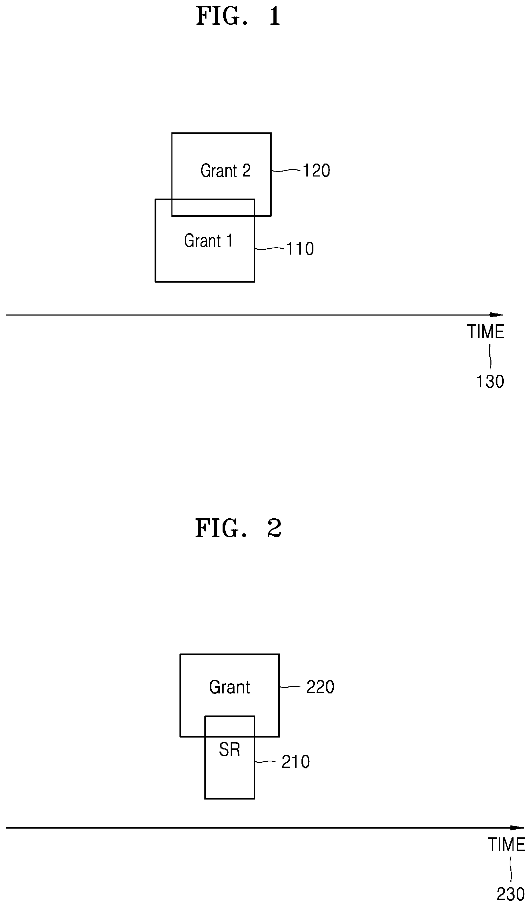

FIG. 1 is a diagram showing a scenario in which a plurality of uplink radio resources overlap. A base station may allocate, to a user equipment (UE), resources 110 and 120 for transmitting at least one of data or control information, and the resources 110 and 120 allocated to the UE may overlap on a time axis 130 or on the time axis 130 and a frequency axis. Each resource 110 or 120 allocated to the UE may be one of a dynamic grant (DG) for allocated from every physical downlink control channel (PDCCH), or a configured grant (CG) repeated at regular intervals once it is configured.

The configured grant may be activated immediately after being configured, or by an activation command. The configured grant may have a fixed traffic pattern or be assumed to be used for high-priority data. According to an embodiment, a specific uplink resource may be allocated dedicatedly for data having a short delay requirement. To this end, the base station may configure, through a radio resource control (RRC) configuration message for the UE, whether a specific uplink resource is usable for a specific logical channel.

When the uplink resources 110 and 120 overlap on the time axis 130 or on the time axis 130 and the frequency axis as shown in FIG. 1, the UE may need to select one radio resource for transmission. The resource selected and used for transmission may be a resource indicating a high priority value of a logical channel having data to be transmitted. To this end, the UE (e.g., a medium access control (MAC) entity of the UE) may determine a priority value of each uplink radio resource. When a MAC protocol data unit (PDU) to be transmitted using an uplink radio resource is already generated, a priority of the uplink radio resource may be determined as a highest priority from among priorities of data (or data and MAC control elements (CEs)) included in the generated MAC PDU.

When the MAC PDU to be transmitted using the uplink radio resource is not generated, the priority of the uplink radio resource may be determined as a highest priority from among priorities of logical channels which may be multiplexed in the uplink radio resource. Therefore, the priority of the uplink radio resource may be determined as a highest priority from among priorities of logical channels (or logical channels and MAC CEs) having data (or data and MAC CEs) to be sent, from among logical channels (or logical channels and MAC CEs) which may use the uplink radio resource.

When an uplink radio resource is allocated but is actually unusable, the radio resource should not be selected for transmission. For example, when the allocated uplink radio resource is a configured grant resource but a configured grant timer for a hybrid automatic repeat request (HARQ) process of the configured grant resource is running, the UE may not transmit certain data or control information on the allocated configured grant resource.

As another example, when a certain uplink radio resource is allocated with a configured scheduling radio network temporary identifier (CS-RNTI) and is a retransmission resource for a configured grant with a new data indicator (NDI) which is not toggled, a radio resource allocated when a HARQ buffer of the HARQ process is empty may not be used for transmission.

As another example, although the allocated uplink radio resource is a part of resources of a bundle and is not an initial transmission resource of the bundle, a radio resource allocated when the HARQ buffer of the HARQ process is empty may not be used for transmission. The unusable radio resource may be excluded when priorities of colliding resources are determined, or the UE (e.g., the MAC entity of the UE) may set a priority value of the resource as a specific low value to prevent use for transmission. According to an embodiment, the UE or the base station may set the priority value of the unusable radio resource as a lowest value to prevent use for transmission.

FIG. 2 is a diagram showing a scenario in which a scheduling request (SR) and an uplink radio resource overlap, according to an embodiment of the disclosure. A base station may allocate, to a UE, an SR configuration resource 210 capable of transmitting an SR message. The base station may also allocate, to the UE, a resource 220 for transmitting at least one of data or control information. The resource 220 allocated to the UE may be one of dynamic grant (DG) allocated from every physical downlink control channel (PDCCH), or configured grant (CG) repeated at regular intervals once it is configured.

The configured grant may be activated immediately after being configured, or by an activation command. The configured grant may have a fixed traffic pattern or be assumed to be used for high-priority data. According to an embodiment, a specific uplink resource may be allocated dedicatedly for data having a short delay requirement. To this end, the base station may configure, through a RRC configuration message for the UE, whether a specific uplink resource is usable for a specific logical channel. The SR configuration resource 210 and the uplink radio resource 220 may overlap on a time axis 230 or on the time axis 230 and a frequency axis.

When the SR configuration resource 210 and the uplink radio resource 220 overlap on the time axis 230 or on the time axis 230 and the frequency axis as shown in FIG. 2, the UE may need to select one of the SR configuration resource 210 or the uplink radio resource 220 for transmission. The resource selected and used for transmission may be a resource indicating a high priority value of a logical channel having triggered an SR to be transmitted, and a high priority value of a logical channel for data (or data and MAC CEs) to be transmitted using an uplink radio resource. To this end, the UE (e.g., a MAC entity of the UE) may determine a priority value of each uplink radio resource. When a MAC PDU to be transmitted using an uplink radio resource is already generated, a priority of the uplink radio resource may be determined as a highest priority from among priorities of data (or data and MAC CEs) included in the generated MAC PDU.

When the MAC PDU to be transmitted using the uplink radio resource is not generated, the priority of the uplink radio resource may be determined as a highest priority from among priorities of logical channels which may be multiplexed in the uplink radio resource. Therefore, the priority of the uplink radio resource may be determined as a highest priority from among priorities of logical channels (or logical channels and MAC CEs) having data (or data and MAC CEs) to be sent, from among logical channels (or logical channels and MAC CEs) which may use the uplink radio resource.

When an SR configuration exists but an SR transmission with the configuration is not triggered, or when an SR transmission is triggered but is already canceled, the SR configuration should not be selected for transmission. The SR configuration resource not to be transmitted may be excluded when a priority of the SR is compared to a priority of the uplink radio resource, or the UE or the base station may set a priority value of the SR configuration as a specific low value to prevent use for transmission. According to an embodiment, the UE or the base station may set the priority value of the SR configuration as a lowest value to prevent use for transmission.

When an uplink radio resource is allocated but is actually unusable, the radio resource should not be selected for transmission. For example, when the allocated uplink radio resource is a configured grant resource but a configured grant timer for a HARQ process of the configured grant resource is running, the UE may not transmit certain data or control information on the allocated configured grant resource.

As another example, when a certain uplink radio resource is allocated with a CS-RNTI and is a retransmission resource for a configured grant with an NDI which is not toggled, a radio resource allocated when a HARQ buffer of the HARQ process is empty may not be used for transmission.

As another example, although the allocated uplink radio resource is a part of resources of a bundle and is not an initial transmission resource of the bundle, a radio resource allocated when the HARQ buffer of the HARQ process is empty may not be used for transmission. The unusable radio resource may be excluded when priorities of colliding resources are determined, or the UE (e.g., the MAC entity of the UE) may set a priority value of the resource as a specific low value to prevent use for transmission. According to an embodiment, the UE or the base station may set the priority value of the unusable radio resource as a lowest value to prevent use for transmission.

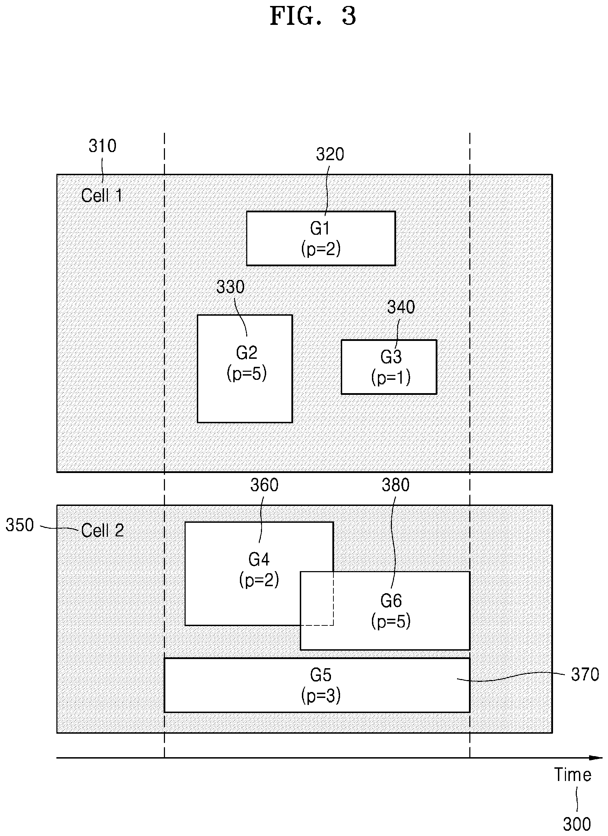

FIG. 3 is a diagram showing a scenario in which uplink resources overlap, according to an embodiment of the disclosure, and problems of a related technology. Although FIG. 3 assumes that two cells 310 and 320 are configured for a UE, unlike FIG. 3, more or fewer cells may be configured. A base station may allocate each cell radio resource to the UE, and such a resource allocation unit is called an uplink radio resource (uplink grant). A plurality of uplink radio resources may be allocated at the same timing, but only one uplink radio resource may be transmitted in each cell.

According to an embodiment of the disclosure, an uplink radio resource to be selected and transmitted may be determined based on a priority of each uplink radio resource. When uplink radio resources overlap on a time axis or on time and frequency axes, a high-priority uplink radio resource may be selected and transmitted. When a MAC PDU to be transmitted using an uplink radio resource is already generated, a priority of the uplink radio resource may be determined as a highest priority from among priorities of data or data and MAC CEs included in the generated MAC PDU.

When the MAC PDU to be transmitted using the uplink radio resource is not generated, the priority of the uplink radio resource may be determined as a highest priority from among priorities of logical channels or logical channels and MAC CEs which may be included in a MAC PDU to be transmitted using the radio resource. Therefore, the priority of the uplink radio resource may be determined as a highest priority from among priorities of logical channels having data to be sent by the UE at a timing of determining the priority of the uplink radio resource.

When priorities of both logical channels and MAC CEs need to be considered, the priority of the uplink radio resource may be determined as a highest priority from among priorities of logical channels having data to be sent by the UE and MAC CEs to be sent by the UE at a timing of determining the priority of the uplink radio resource. However, the method of determining the priority of the uplink radio resource is not limited to the above example, and the priority of the uplink radio resource may be determined based on a certain criterion or a certain method.

The embodiment of FIG. 3 shows that a total of three uplink radio resources 320, 330, and 340 are configured for the cell 1 310. Each uplink radio resource may be allocated in a dynamic grant or configured grant manner. The embodiment of FIG. 3 assumes that a priority of each uplink radio resource is determined using the above-described method or another predetermined method. The priority of each uplink radio resource may be defined as a certain value (e.g., a number value).

The embodiment of FIG. 3 assumes that the first uplink radio resource 320 has a priority of 2, the second uplink radio resource 330 has a priority of 5, and the third uplink radio resource 340 has a priority of 1. A total of three uplink radio resources 360, 370, and 380 are configured for the cell 2 350. It is assumed that the fourth uplink radio resource 360 has a priority of 2, the fifth uplink radio resource 370 has a priority of 3, and the sixth uplink radio resource 380 has a priority of 5.

According to an embodiment, uplink radio resources allocated by the base station to the UE may overlap with each other on the time axis. For example, the first uplink radio resource 320 overlaps with the second uplink radio resource 330 and the third uplink radio resource 340 on the time axis in the cell 1 310. The fourth uplink radio resource 360 overlaps with the fifth uplink radio resource 370 on the time axis in the cell 2 350, and overlaps with the sixth uplink radio resource 380 on the time and frequency axes in the cell 2 350.

When uplink radio resources overlap on the time axis or on the time and frequency axes, based on priorities of the uplink radio resources, an uplink radio resource having a high priority (i.e., a small priority value) may be selected and transmitted as a prioritized uplink radio resource (prioritized uplink grant). That is, based on priority values, an uplink radio resource having a highest priority value may be selected and used to transmit at least one of data or control information. The prioritized uplink radio resource may refer to an uplink radio resource determined to be preferentially transmitted based on a priority value.

A deprioritized uplink radio resource (deprioritized uplink grant) may not be transmitted. For example, an uplink radio resource other than the uplink radio resource having the highest priority value may not be used for transmission.

According to an embodiment of the disclosure, prioritization may be a process of determining an uplink radio resource to be transmitted, based on priority values of uplink radio resources. A deprioritized uplink radio resource determined in the prioritization process may have a priority higher than that of another uplink radio resource and thus prevent transmission of the other uplink radio resource. In other words, an uplink radio resource usable for transmission may not be used due to an uplink radio resource other than the uplink radio resource having the highest priority value.

In the embodiment of FIG. 3, the first uplink radio resource 320 has a priority of 2 and thus the second uplink radio resource 330 having a priority of 5 may be determined as a deprioritized uplink radio resource. However, because the first uplink radio resource 320 overlaps on the time axis with and has a priority lower than that of the third uplink radio resource 340 having a priority of 1, the first uplink radio resource 320 may also be determined as a deprioritized uplink radio resource not to be transmitted.

In this case, after the third uplink radio resource 340 is transmitted as a prioritized uplink radio resource, the second uplink radio resource 330 does not overlap with the third uplink radio resource 340 on at least one of the time axis or the frequency axis and thus may be transmittable. However, the second uplink radio resource 330 is determined as the deprioritized uplink radio resource in the prioritization process and thus may not be transmitted. This phenomenon may reduce a radio resource usage rate and degrade key performance indicators (KPIs) such as reliability.

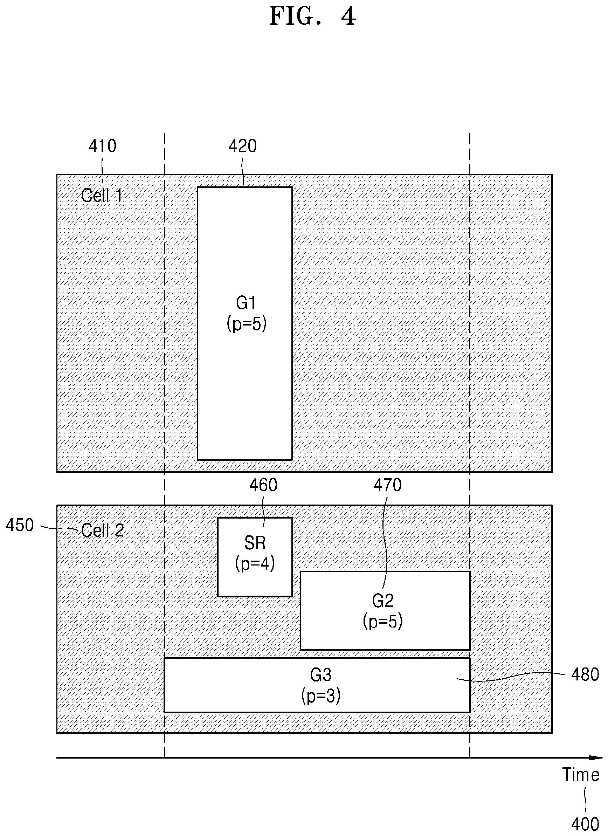

FIG. 4 is a diagram showing a scenario in which uplink resources overlap, according to an embodiment of the disclosure, and problems of a related technology. Although FIG. 4 assumes that two cells 410 and 420 are configured for a UE, unlike FIG. 4, more or fewer cells may be configured. A base station may allocate each cell radio resource to the UE, and such a resource allocation unit is called an uplink radio resource (uplink grant). A plurality of uplink radio resources may be allocated at the same timing, but only one uplink radio resource may be transmitted in each cell.

In addition, the base station may configure an SR configuration resource for each cell, and the SR configuration resource may overlap with another SR configuration resource or another uplink radio resource on a time axis or on time and frequency axes. According to an embodiment of the disclosure, an SR configuration resource or uplink radio resource to be selected and transmitted may be determined based on a priority of each uplink radio resource. When SR configuration resources and uplink radio resources overlap on the time axis or on the time and frequency axes, a high-priority SR configuration resource or uplink radio resource may be selected and transmitted. When a MAC PDU to be transmitted using an uplink radio resource is already generated, the priority of the uplink radio resource may be determined as a highest priority from among priorities of data or data and MAC CEs included in the generated MAC PDU.

When the MAC PDU to be transmitted using the uplink radio resource is not generated, the priority of the uplink radio resource may be determined as a highest priority from among priorities of logical channels or logical channels and MAC CEs which may be included in a MAC PDU to be transmitted using the radio resource. Therefore, the priority of the uplink radio resource may be determined as a highest priority from among priorities of logical channels having data to be sent by the UE at a timing of determining the priority of the uplink radio resource.

When priorities of both logical channels and MAC CEs need to be considered, the priority of the uplink radio resource may be determined as a highest priority from among priorities of logical channels having data to be sent by the UE and MAC CEs to be sent by the UE at a timing of determining the priority of the uplink radio resource. The priority of the SR configuration resource may be determined as a priority of a logical channel having triggered an SR. The priority of the SR configuration resource may be determined and used only when the SR configuration resource is usable, that is, only when the SR is triggered. However, the method of determining the priority of the SR configuration resource and the priority of the uplink radio resource is not limited to the above example, and the priority of the SR configuration resource and the priority of the uplink radio resource may be determined based on a certain criterion or a certain method.

The embodiment of FIG. 4 shows that a total of one uplink radio resource 420 is configured for the cell 1 410. Each uplink radio resource may be allocated in a dynamic grant or configured grant manner. The embodiment of FIG. 4 assumes that a priority of each uplink radio resource is determined using the above-described method or another predetermined method. The priority of each uplink radio resource may be defined as a certain value (e.g., a number value).

The embodiment of FIG. 4 assumes that the first uplink radio resource 420 has a priority of 5. One SR configuration resource 460 and two uplink radio resources 470 and 480 are configured for the cell 2 450. It is assumed that the SR configuration resource 460 has a priority of 4. It is also assumed that the second uplink radio resource 470 has a priority of 5, and the third uplink radio resource 480 has a priority of 3.

According to an embodiment, SR configuration resources and uplink radio resources allocated by the base station to the UE may overlap with each other on the time axis. For example, the first uplink radio resource 420 overlaps with the SR configuration resource 460 on the time axis. The third uplink radio resource 480 overlaps with the SR configuration resource 460 on the time axis in the cell 2 450. An SR configuration resource is transmitted in a physical uplink control channel (PUCCH) whereas an uplink radio resource is transmitted in a physical uplink shared channel (PUSCH), and PUCCH transmission and PUSCH transmission may not be simultaneously performed at the same timing due to, for example, uplink power. Therefore, when the SR configuration resource 460 is transmitted, the first uplink radio resource 420 and the third uplink radio resource 480 overlapping with the SR configuration resource 460 on the time axis may not be transmitted.

When SR configuration resources and uplink radio resources overlap on the time axis or on the time and frequency axes, based on priorities of the SR configuration resources and the uplink radio resources, an SR configuration resource or uplink radio resource having a high priority (i.e., a small priority value) may be selected and transmitted as a prioritized SR transmission or a prioritized uplink radio resource (prioritized uplink grant). That is, based on priority values, an SR configuration resource or uplink radio resource having a highest priority value may be selected and used to transmit at least one of data or control information. The prioritized uplink radio resource may refer to an uplink radio resource determined to be preferentially transmitted based on a priority value.

A deprioritized SR transmission or deprioritized uplink radio resource (deprioritized uplink grant) may not be transmitted. For example, an uplink radio resource or SR configuration resource other than the uplink radio resource or SR configuration resource having the highest priority value may not be used for transmission.

According to an embodiment of the disclosure, prioritization may be a process of determining an uplink radio resource to be transmitted, based on priority values of uplink radio resources and priority values of SR configuration resources.

A deprioritized SR configuration resource determined in the prioritization process may have a priority higher than that of another uplink radio resource and thus prevent transmission of the other uplink radio resource. In other words, an uplink radio resource (or SR configuration resource) usable for transmission may not be used due to an uplink radio resource (or SR configuration resource) other than the uplink radio resource (or SR configuration resource) having the highest priority value.

In the embodiment of FIG. 4, the first uplink radio resource 420 has a priority of 5 and thus may be determined as a deprioritized uplink radio resource due to the SR configuration resource 460 having a priority of 4. However, because the third uplink radio resource 480 having a priority of 3 overlaps on the time axis with and has a priority higher than that of the SR configuration resource 460, the SR configuration resource 460 may also be determined as a deprioritized SR transmission not to be transmitted.

In this case, after the third uplink radio resource 480 is transmitted as a prioritized uplink radio resource, the first uplink radio resource 420 may be transmittable because the first uplink radio resource 420 belongs to the cell 1 410 differently from the third uplink radio resource 480, another uplink radio resource overlapping with the first uplink radio resource 420 on at least one of the time axis or the frequency axis does not exist in the cell 1 410, and the SR configuration resource 460 is not transmitted. However, the first uplink radio resource 420 is determined as the deprioritized uplink radio resource and thus may not be transmitted. This phenomenon may reduce a radio resource usage rate and degrade KPIs such as reliability.

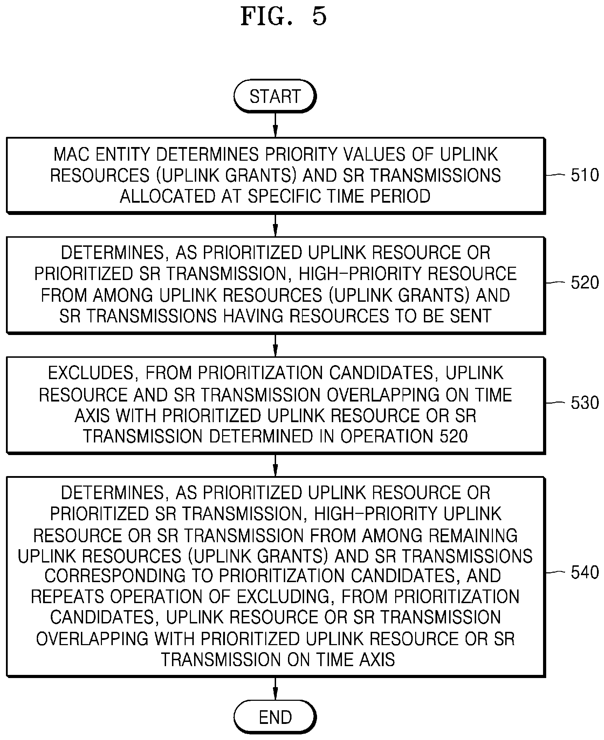

FIG. 5 is a flowchart of a prioritization process according to an embodiment of the disclosure. As described above in relation to FIGS. 3 and 4, a phenomenon in which a deprioritized uplink radio resource or a deprioritized SR configuration resource causes another uplink radio resource to be determined as a deprioritized uplink radio resource not to be transmitted may reduce radio resource efficiency and degrade performance. That is, to solve the phenomenon in which the deprioritized uplink radio resource or deprioritized SR configuration resource determined in a prioritization process causes another transmittable uplink radio resource to be determined as being unusable, the embodiment of FIG. 5 proposes a method of excluding, from a prioritization process, an uplink radio resource or SR configuration resource having a priority lower than that of a prioritized uplink radio resource or a prioritized SR configuration resource.

In operation 510, a MAC entity may determine priority values of uplink radio resources (uplink grants) and SR transmissions (i.e., transmissions on triggered SR configuration resources), which are allocated at a specific time period. The MAC entity may be a MAC entity of a UE. The MAC entity may also be a MAC entity of a base station. According to an embodiment of the disclosure, the priority value of each uplink radio resource may be determined using the method described above in relation to FIG. 3 or 4, or another method. The priority value of each SR transmission may be determined as a priority of a logical channel having triggered the SR transmission as described above in relation to FIG. 4, or using another method. In operation 510, the MAC entity sets, as prioritization candidates, data or SR transmissions having resources to be sent. According to an embodiment of the disclosure, the specific time period may be a time defined by a wireless communication system, e.g., a frame, a subframe, a slot, or a mini-slot, or a period arbitrarily set by the UE.

In operation 520, it may be determined whether a high-priority uplink radio resource or SR transmission from among uplink radio resources and SR transmissions having resources to be sent is a prioritized uplink radio resource or a prioritized SR transmission. That is, the prioritized uplink radio resource or the prioritized SR transmission may be determined based on priorities of the uplink radio resources and SR transmissions having resources to be sent.

Because the determination of the prioritized resource starts from the high-priority uplink radio resource or SR transmission in operation 520, a highest-priority uplink radio resource or SR transmission may be determined as a prioritized uplink radio resource or a prioritized SR transmission.

In operation 530, after the prioritized uplink radio resource or the prioritized SR transmission is determined, an uplink radio resource or SR transmission overlapping on a time axis with the prioritized uplink radio resource or prioritized SR transmission determined in operation 520 may be excluded from the prioritization candidates.

According to an embodiment of the disclosure, when the prioritized resource is a prioritized uplink radio resource (prioritized uplink grant) to be transmitted in a PUSCH, an uplink radio resource or SR transmission resource overlapping with the prioritized uplink radio resource on the time axis in the same cell or the same bandwidth part (BWP) may be determined as a deprioritized uplink radio resource or a deprioritized SR transmission.

When the prioritized resource is a prioritized SR transmission to be transmitted in a PUCCH, all uplink radio resources and SR transmission resources in the same MAC entity or UE may be determined as deprioritized uplink radio resources or deprioritized SR transmissions. The deprioritized uplink radio resource or deprioritized SR transmission overlapping with the prioritized resource on the time axis may be subsequently excluded from the prioritization candidates.

In operation 540, a highest-priority uplink radio resource or SR transmission resource from among the remaining uplink radio resources and SR transmissions set as the prioritization candidates, i.e., the uplink radio resources and SR transmissions which are not yet determined as deprioritized uplink radio resources or deprioritized SR transmissions, may be determined as a prioritized uplink radio resource or a prioritized SR transmission. That is, a prioritized uplink radio resource or SR transmission other than the prioritized uplink radio resource or prioritized SR transmission determined in operation 520 may be determined.

According to an embodiment of the disclosure, as in operation 530, the MAC entity may repeat the process of excluding, from the prioritization candidates, an uplink radio resource or SR transmission overlapping with the prioritized uplink radio resource or the prioritized SR transmission on the time axis. Thereafter, operation 540 may be repeated until no more uplink radio resources or SR configuration resources set as the prioritization candidates remain.

When operations 510 to 540 of FIG. 5 are applied to the resource configuration shown in FIG. 3, the following prioritization process is performed.
- The third uplink radio resource 340 having a highest priority (p=1) is determined as a prioritized uplink radio resource. The first uplink radio resource 320 overlapping with the third uplink radio resource 340 on the time axis of the cell 1 310 is determined as a deprioritized uplink radio resource, and subsequently excluded from the prioritization process (i.e., excluded from the prioritization candidates).
- The fourth uplink radio resource 360 having a next highest priority is determined as a prioritized uplink radio resource. The sixth uplink radio resource 380 and the fifth uplink radio resource 370 overlapping with the fourth uplink radio resource 360 on the time axis of the cell 2 350 are determined as deprioritized uplink radio resources, and subsequently excluded from the prioritization process (i.e., excluded from the prioritization candidates).
- The second uplink radio resource 330 having a next highest priority (i.e., the only prioritization candidate at present) is determined as a prioritized uplink radio resource. The prioritization process is terminated because no more prioritization candidate resources remain.

When operations 510 to 540 of FIG. 5 are applied to the resource configuration shown in FIG. 4, the following prioritization process is performed.
- The third uplink radio resource 480 having a highest priority (p=3) is determined as a prioritized uplink radio resource. The second uplink radio resource 470 and the SR transmission 460 overlapping with the third uplink radio resource 480 on the time axis of the cell 1 410 are respectively determined as a deprioritized uplink radio resource and a deprioritized SR transmission, and subsequently excluded from the prioritization process (i.e., excluded from the prioritization candidates).
- The first uplink radio resource 420 having a next highest priority (i.e., the only prioritization candidate at present) is determined as a prioritized uplink radio resource. The prioritization process is terminated because no more prioritization candidate resources remain.

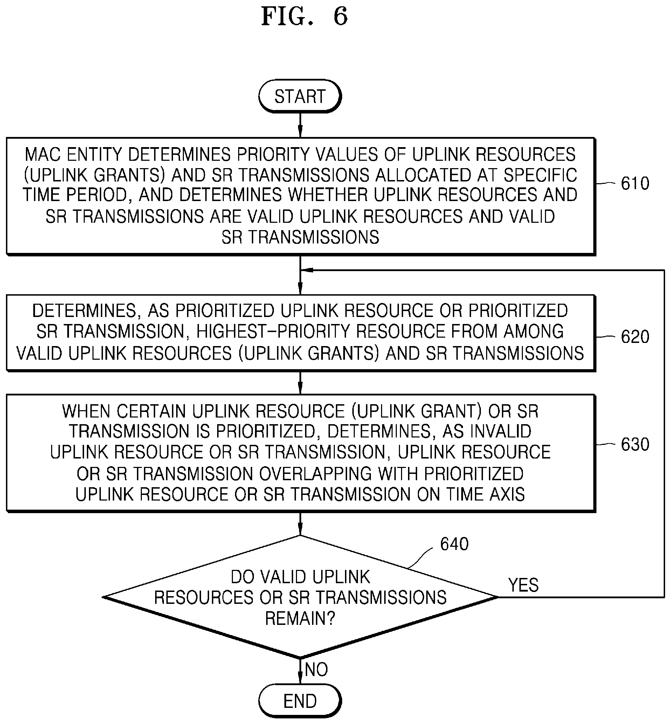

FIG. 6 is a flowchart of a prioritization process according to an embodiment of the disclosure. As described above in relation to FIGS. 3 and 4, a phenomenon in which a deprioritized uplink radio resource or a deprioritized SR configuration resource causes another uplink radio resource to be determined as a deprioritized uplink radio resource not to be transmitted may reduce radio resource efficiency and degrade performance. That is, to solve the phenomenon in which the deprioritized uplink radio resource or the deprioritized SR configuration resource determined in a prioritization process causes another transmittable uplink radio resource to be determined as being unusable, the embodiment of FIG. 6 proposes a method of excluding, from a prioritization process, an uplink radio resource or SR configuration resource having a priority lower than that of a prioritized uplink radio resource or a prioritized SR configuration resource.

In operation 610, a MAC entity may determine priority values of uplink radio resources (uplink grants) and SR transmissions (i.e., transmissions on triggered SR configuration resources), which are allocated at a specific time period, and determine whether the uplink radio resources and the SR transmissions are valid uplink radio resources and valid SR transmissions. According to an embodiment of the disclosure, the priority value of each uplink radio resource may be determined using the method described above in relation to FIG. 3 or 4, or another method. The priority value of each SR transmission may be determined as a priority of a logical channel having triggered the SR transmission as described above in relation to FIG. 4, or using another method.

According to an embodiment of the disclosure, the valid uplink radio resource or the valid SR transmission refers to a transmittable uplink radio resource or a transmittable SR transmission. For example, an SR configuration resource without SR triggering may not be used for transmission and thus may not be a valid SR transmission. An uplink radio resource not usable for data transmission may not be a valid uplink radio resource. However, the criterion for determining whether the uplink radio resources and the SR transmissions are valid is not limited to the above example, and it may be determined whether the uplink radio resources and the SR transmissions are valid, by using various criteria or methods. In operation 610, the MAC entity determine valid uplink radio resources or valid SR transmissions, and use the valid resources as prioritization candidates in a subsequent operation. According to an embodiment of the disclosure, the specific time period may be a time defined by a wireless communication system, e.g., a frame, a subframe, a slot, or a mini-slot, or a period arbitrarily set by the UE.

In operation 620, it may be determined whether a high-priority uplink radio resource or SR transmission from among the valid uplink radio resources and SR transmissions is a prioritized uplink radio resource or a prioritized SR transmission. That is, the prioritized uplink radio resource or the prioritized SR transmission may be determined based on priorities of the valid uplink radio resources and SR transmissions.

In operation 620, the high-priority uplink radio resource or SR transmission has a highest-priority and thus may be determined as a prioritized uplink radio resource or a prioritized SR transmission.

In operation 630, when a certain uplink radio resource or SR transmission is prioritized, an uplink radio resource or SR transmission overlapping with the prioritized uplink radio resource or SR transmission on a time axis may not be prioritized and thus is determined as an invalid uplink radio resource or an invalid SR transmission. The invalid uplink radio resource and the invalid SR transmission may be excluded from a subsequent operation for determining a prioritized uplink radio resource or a prioritized SR transmission. In this case, when the prioritized resource is a prioritized uplink radio resource (prioritized uplink grant) to be transmitted in a PUSCH, an uplink radio resource or SR transmission resource overlapping with the prioritized uplink radio resource on the time axis in the same cell or the same BWP may be determined as an invalid uplink radio resource or an invalid SR transmission.

When the prioritized resource is a prioritized SR transmission to be transmitted in a PUCCH, all uplink radio resources and SR transmission resources in the same MAC entity or UE may be determined as invalid uplink radio resources or invalid SR transmissions. The deprioritized uplink radio resource or deprioritized SR transmission overlapping with the prioritized resource on the time axis may be invalid and thus subsequently excluded from the prioritization candidates.

In operation 640, it may be determined whether valid uplink radio resources or valid SR transmissions remain at the specific time period. When valid uplink radio resources or valid SR transmissions remain, the process returns to operation 620 and a highest-priority resource from among the remaining valid uplink radio resources and valid SR transmissions is prioritized. A resource overlapping with the new prioritized uplink radio resource or prioritized SR transmission on the time axis is determined as being invalid. The MAC layer repeats the process of FIG. 6 until no more valid uplink radio resources or valid SR transmissions remain. Herein, the invalid uplink radio resources or invalid SR transmissions may be determined as deprioritized uplink radio resources or deprioritized SR transmissions.

When operations 610 to 640 of FIG. 6 are applied to the resource configuration shown in FIG. 3, the following prioritization process is performed.
- The third uplink radio resource 340 having a highest priority (p=1) from among valid uplink radio resources is determined as a prioritized uplink radio resource. The first uplink radio resource 320 overlapping with the third uplink radio resource 340 on the time axis of the cell 1 310 is determined as an invalid uplink radio resource. Eventually, the first uplink radio resource 320 is determined as a deprioritized uplink radio resource.
- The fourth uplink radio resource 360 having a next highest priority from among the remaining valid uplink radio resources is determined as a prioritized uplink radio resource. The fifth uplink radio resource 370 and the sixth uplink radio resource 380 overlapping with the fourth uplink radio resource 360 on the time axis of the cell 2 350 are determined as invalid uplink radio resources. Eventually, the fifth uplink radio resource 370 and the sixth uplink radio resource 380 are determined as deprioritized uplink radio resources.
- The second uplink radio resource 330, which is the only remaining valid uplink radio resource, is determined as a prioritized uplink radio resource. The prioritization process is terminated because no more prioritization candidate resources remain.

When operations 610 to 640 of FIG. 6 are applied to the resource configuration shown in FIG. 4, the following prioritization process is performed.
- The third uplink radio resource 480 having a highest priority (p=3) from among valid uplink radio resources and SR transmissions is determined as a prioritized uplink radio resource. The second uplink radio resource 470 and the SR transmission 460 overlapping with the third uplink radio resource 480 on the time axis of the cell 1 410 are respectively determined as an invalid uplink radio resource and an invalid SR transmission. Eventually, the second uplink radio resource 470 and the SR transmission 460 are deprioritized.
- The first uplink radio resource 420, which is the only remaining valid uplink radio resource, is determined as a prioritized uplink radio resource. The prioritization process is terminated because no more prioritization candidate resources remain.

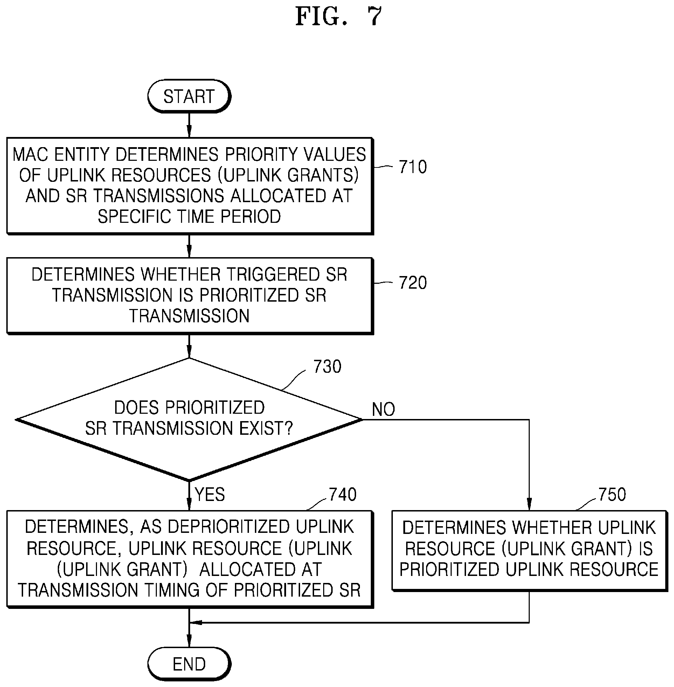

FIG. 7 is a flowchart of a prioritization process according to an embodiment of the disclosure. As described above in relation to FIG. 4, a phenomenon in which a deprioritized SR configuration resource causes another uplink radio resource to be determined as a deprioritized uplink radio resource not to be transmitted may reduce radio resource efficiency and degrade performance. That is, to solve the phenomenon in which the deprioritized SR configuration resource determined in a prioritization process causes another transmittable uplink radio resource to be determined as being unusable, the embodiment of FIG. 7 proposes a method of excluding, from a prioritization process, an SR configuration resource having a priority lower than that of a prioritized uplink radio resource or a prioritized SR configuration resource.

In operation 710, initially, a MAC entity may determine priority values of uplink radio resources (uplink grants) and SR transmissions (i.e., transmissions on triggered SR configuration resources), which are allocated at a specific time period. According to an embodiment of the disclosure, the priority value of each uplink radio resource may be determined using the method described above in relation to FIG. 3 or 4, or another method. The priority value of each SR transmission may be determined as a priority of a logical channel having triggered the SR transmission as described above in relation to FIG. 4, or using another method. According to an embodiment of the disclosure, the specific time period may be a time defined by a wireless communication system, e.g., a frame, a subframe, a slot, or a mini-slot, or a period arbitrarily set by the UE.

In operation 720, it may be determined whether a triggered SR transmission is a prioritized SR transmission. When an uplink radio resource (i.e., a resource to be transmitted in a PUSCH) overlapping on a time axis with and having a priority higher than or equal to that of the triggered SR transmission exists, the SR transmission may not be determined as a prioritized SR transmission. When an uplink radio resource overlapping on a time axis with and having a priority higher than or equal to that of the triggered SR transmission does not exist, the SR transmission may be determined as a prioritized SR transmission. When the prioritized SR transmission exists, an uplink radio resource allocated at a transmission timing of the prioritized SR may be determined as a deprioritized uplink radio resource. In other words, an uplink radio resource overlapping with the SR transmission on the time axis may be determined as a deprioritized uplink radio resource.

In operation 730, the MAC entity may determine whether a prioritized SR transmission exists.

When the prioritized SR transmission exists, in operation 740, because the prioritized resource is a prioritized SR transmission to be transmitted in a PUCCH, all uplink radio resources and SR transmission resources in the same MAC entity or UE may be determined as deprioritized uplink radio resources or deprioritized SR transmissions. It may be determined whether an uplink radio resource not overlapping with the SR transmission resource on the time axis is a prioritized uplink radio resource, based on preset rules.

When the SR transmission is not a prioritized SR transmission, in operation 750, it may be determined whether an uplink radio resource is a prioritized uplink radio resource, based on preset rules. According to an embodiment of the disclosure, based on the preset rules, an uplink radio resource may be determined as a prioritized uplink radio resource when another uplink radio resource overlapping with and having a priority higher than that of the uplink radio resource does not exist. In operation 750, because a prioritized SR transmission overlapping with the uplink radio resources on the time axis is not triggered, the SR transmission overlapping on the time axis is not considered and a high-priority resource may be determined as a prioritized uplink radio resource by merely comparing the priorities of the uplink radio resources overlapping on the time axis in a cell.

When operations 710 to 750 of FIG. 7 are applied to the resource configuration shown in FIG. 4, the following prioritization process is performed.
- Because the third uplink radio resource 480 having a priority higher than that of the SR transmission 460 exists, the SR transmission 460 is not determined as a prioritized SR transmission.
- The third uplink radio resource 480 having a highest priority (p=3) from among uplink radio resources and SR transmissions is determined as a prioritized uplink radio resource.
- The second uplink radio resource 470 overlaps on the time axis with and has a priority lower than that of the third uplink radio resource 480, and thus is determined as a deprioritized uplink radio resource.
- The first uplink radio resource 420 does not overlap with any uplink radio resource on the time axis, and thus is determined as a prioritized uplink radio resource.

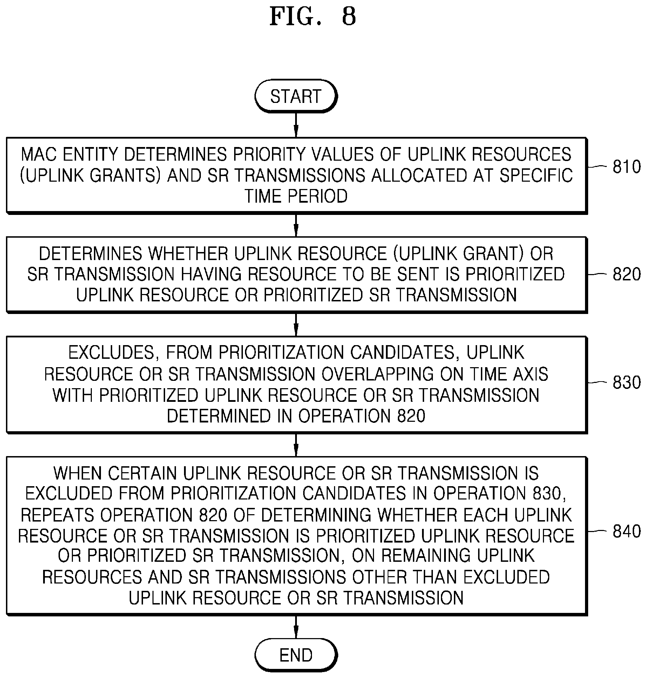

FIG. 8 is a flowchart of a prioritization process according to the claimed embodiment of the disclosure. As described above in relation to FIGS. 3 and 4, a phenomenon in which a deprioritized uplink radio resource or a deprioritized SR configuration resource causes another uplink radio resource to be determined as a deprioritized uplink radio resource not to be transmitted may reduce radio resource efficiency and degrade performance. That is, to solve the phenomenon in which the deprioritized uplink radio resource or the deprioritized SR configuration resource determined in a prioritization process causes another transmittable uplink radio resource to be determined as being unusable, the embodiment of FIG. 8 proposes a method of excluding, from a prioritization process, an uplink radio resource or SR configuration resource having a priority lower than that of a prioritized uplink radio resource or a prioritized SR configuration resource.

In operation 810, a MAC entity determines priority values of uplink radio resources (uplink grants) and SR transmissions (i.e., transmissions on triggered SR configuration resources), which are allocated at a specific time period. According to an embodiment of the disclosure, the priority value of each uplink radio resource may be determined using the method described above in relation to FIG. 3 or 4, or another method. The priority value of each SR transmission may be determined as a priority of a logical channel having triggered the SR transmission as described above in relation to FIG. 4, or using another method. In operation 810, the MAC entity sets, as prioritization candidates, data or SR transmissions having resources to be sent. According to an embodiment of the disclosure, the specific time period may be a time defined by a wireless communication system, e.g., a frame, a subframe, a slot, or a mini-slot, or a period arbitrarily set by the UE.

In operation 820, it determines whether one of uplink radio resources and SR transmissions having resources to be sent is a prioritized uplink radio resource or a prioritized SR transmission. That is, the prioritized uplink radio resource or the prioritized SR transmission may be determined based on priorities of the uplink radio resources and SR transmissions having resources to be sent.

According to an embodiment of the disclosure, an uplink radio resource may be determined as a prioritized uplink radio resource when another uplink radio resource or SR transmission overlapping with and having a priority higher than that of the uplink radio resource does not exist. An SR transmission may be determined as a prioritized SR transmission when another uplink radio resource overlapping with and having a priority higher than that of the SR transmission does not exist.

In operation 830, after the prioritized uplink radio resource or the prioritized SR transmission is determined, an uplink radio resource and SR transmission overlapping on a time axis with the prioritized uplink radio resource or prioritized SR transmission determined in operation 820 is excluded from the prioritization candidates.

According to an embodiment of the disclosure, when the prioritized resource is a prioritized uplink radio resource (prioritized uplink grant) to be transmitted in a PUSCH, an uplink radio resource or SR transmission resource overlapping with the prioritized uplink radio resource on the time axis in the same cell or the same BWP may be determined as a deprioritized uplink radio resource or a deprioritized SR transmission.

When the prioritized resource is a prioritized SR transmission to be transmitted in a PUCCH, all uplink radio resources and SR transmission resources in the same MAC entity or UE may be determined as deprioritized uplink radio resources or deprioritized SR transmissions. The deprioritized uplink radio resource or deprioritized SR transmission overlapping with the prioritized resource on the time axis may be subsequently excluded from the prioritization candidates.

In operation 840, when a certain uplink radio resource or SR transmission is excluded from the prioritization candidates, operation 820 for determining whether each uplink radio resource or SR transmission is a prioritized uplink radio resource or a prioritized SR transmission is repeated on the remaining uplink radio resources and SR transmissions other than the excluded uplink radio resource or SR transmission. Because the uplink radio resource or SR transmission not to be transmitted is excluded from the prioritization process in operation 830, the prioritization determination result of operation 840 may differ.

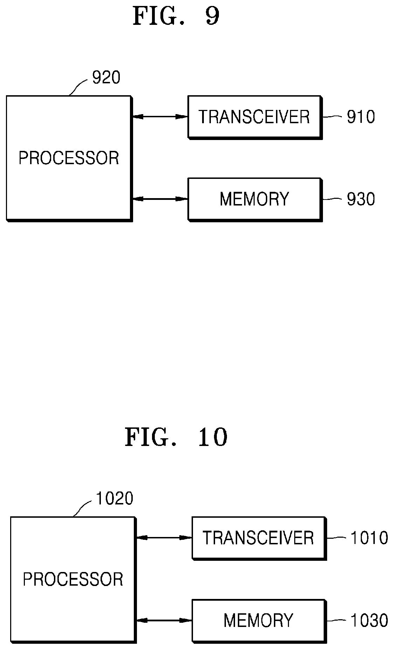

FIG. 9 is a block diagram of a UE according to an embodiment of the disclosure.

Referring to FIG. 9, the UE may include a transceiver 910, a processor 920, and a memory 930. In the disclosure, the processor 920 may be a circuit, an application-specific integrated circuit, or at least one processor. The UE is not limited to the above example, and may include more or fewer elements than those illustrated in FIG. 9. In addition, the transceiver 910, the processor 920, and the memory 930 may be implemented in the form of a single chip.

The transceiver 910 may transmit or receive signals to or from another network entity. The transceiver 910 may, for example, receive system information or receive a synchronization signal or a reference signal from a base station. The signals transmitted to or received from the base station or the network entity may include control information and data. To this end, the transceiver 910 may include, for example, a radio-frequency (RF) transmitter for up-converting a frequency of and amplifying a signal to be transmitted, and an RF receiver for low-noise-amplifying and down-converting a frequency of a received signal. However, the RF transmitter and the RF receiver are merely examples and the elements of the transceiver 910 are not limited thereto. The transceiver 910 may receive signals through wireless channels and output the signals to the processor 920, and transmit signals output from the processor 920, through the wireless channels.

The processor 920 may control overall operations of the UE, according to an embodiment of the disclosure. For example, the processor 920 may control the flow of signals between blocks to perform the above-described operations based on each flowchart.

The memory 930 may store at least one of information transmitted or received by the transceiver 910, and information generated by the processor 920. The memory 930 may store programs and data required to operate the UE. The memory 930 may also store control information or data included in signals obtained by the UE. The memory 930 may include one or a combination of storage media such as read-only memory (ROM), random access memory (RAM), a hard disk, a compact disc-ROM (CD-ROM), and a digital versatile disc (DVD). The memory 930 may include a plurality of memories.

FIG. 10 is a block diagram of a base station according to an embodiment of the disclosure.

Referring to FIG. 10, the base station may include a transceiver 1010, a processor 1020, and a memory 1030. In the disclosure, the processor 1020 may be a circuit, an application-specific integrated circuit, or at least one processor. The base station is not limited to the above example, and may include more or fewer elements than those illustrated in FIG. 10. In addition, the transceiver 1010, the processor 1020, and the memory 1030 may be implemented in the form of a single chip.

The transceiver 1010 may transmit or receive signals to or from another network entity. The transceiver 1010 may, for example, transmit system information or transmit a synchronization signal or a reference signal to a UE. The signals transmitted to or received from the UE or the network entity may include control information and data. To this end, the transceiver 1010 may include, for example, an RF transmitter for up-converting a frequency of and amplifying a signal to be transmitted, and an RF receiver for low-noise-amplifying and down-converting a frequency of a received signal. However, the RF transmitter and the RF receiver are merely examples and the elements of the transceiver 1010 are not limited thereto. The transceiver 1010 may receive signals through wireless channels and output the signals to the processor 1020, and transmit signals output from the processor 1020, through the wireless channels.

The processor 1020 may control overall operations of the base station, according to an embodiment of the disclosure. For example, the processor 1020 may control the flow of signals between blocks to perform the above-described operations based on each flowchart.

The memory 1030 may store at least one of information transmitted or received by the transceiver 1010, and information generated by the processor 1020. The memory 1030 may store programs and data required to operate the base station. The memory 1030 may also store control information or data included in signals obtained by the network entity. The memory 1030 may include one or a combination of storage media such as ROM, RAM, a hard disk, a CD-ROM, and a DVD. The memory 1030 may include a plurality of memories.

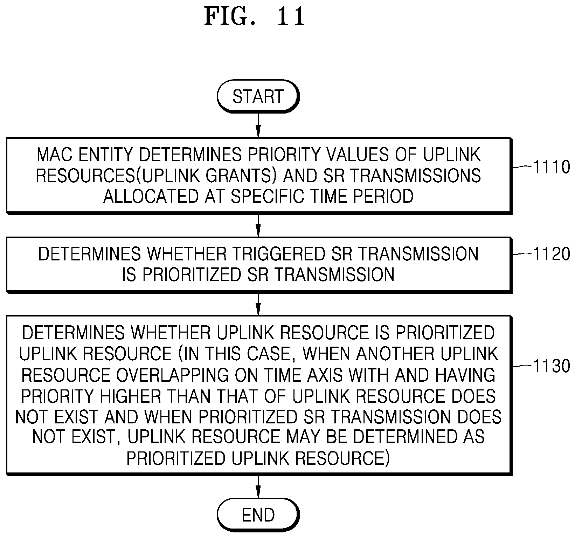

FIG. 11 is a flowchart of a prioritization process according to an embodiment of the disclosure. As described above in relation to FIG. 4, a phenomenon in which a deprioritized SR configuration resource causes another uplink radio resource to be determined as a deprioritized uplink radio resource not to be transmitted may reduce radio resource efficiency and degrade performance. That is, to solve the phenomenon in which the deprioritized SR configuration resource determined in a prioritization process causes another transmittable uplink radio resource to be determined as being unusable, the embodiment of FIG. 11 proposes a method of excluding, from a prioritization process, an SR configuration resource having a priority lower than that of a prioritized uplink radio resource or a prioritized SR configuration resource.

In operation 1110, a MAC entity may determine priority values of uplink radio resources (uplink grants) and SR transmissions (i.e., transmissions on triggered SR configuration resources), which are allocated at a specific time period. According to an embodiment of the disclosure, the priority value of each uplink radio resource may be determined using the method described above in relation to FIG. 3 or 4, or another method. The priority value of each SR transmission may be determined as a priority of a logical channel having triggered the SR transmission as described above in relation to FIG. 4, or using another method. According to an embodiment of the disclosure, the specific time period may be a time defined by a wireless communication system, e.g., a frame, a subframe, a slot, or a mini-slot, or a period arbitrarily set by the UE.

In operation 1120, it may be determined whether a triggered SR transmission is a prioritized SR transmission. When an uplink radio resource (i.e., a resource to be transmitted in a PUSCH) overlapping on a time axis with and having a priority higher than or equal to that of the triggered SR transmission exists, the SR transmission may not be determined as a prioritized SR transmission. When an uplink radio resource overlapping on a time axis with and having a priority higher than or equal to that of the triggered SR transmission does not exist, the SR transmission may be determined as a prioritized SR transmission. When the prioritized SR transmission exists, an uplink radio resource allocated at a transmission timing of the prioritized SR may be determined as a deprioritized uplink radio resource. In other words, an uplink radio resource overlapping with the SR transmission on the time axis may be determined as a deprioritized uplink radio resource. According to an embodiment of the disclosure, in operation 1120, the MAC entity may initially determine whether the triggered SR transmission other than an uplink radio resource is a prioritized SR transmission.

In operation 1130, the MAC entity may determine whether each uplink radio resource is a prioritized uplink radio resource. The MAC entity may determine whether each uplink radio resource is a prioritized uplink radio resource, by determining whether another uplink radio resource or a prioritized SR transmission overlapping with the uplink radio resource on the time axis exists. Specifically, when the uplink radio resource is a configured grant, and when condition 1) that a configured grant resource having a priority higher than that of and overlapping on the time axis with the uplink radio resource does not exist, condition 2) that a dynamic grant resource having a priority higher than or equal to that of and overlapping on the time axis with the uplink radio resource does not exist, and condition 3) that a prioritized SR transmission having a priority higher than that of and overlapping on the time axis with the uplink radio resource does not exist are satisfied, the uplink radio resource may be determined as a prioritized uplink radio resource.

When the uplink radio resource is a dynamic grant (i.e., a radio resource allocated with a cell radio network temporary identifier (C-RNTI) or a CS-RNTI), and when condition 1) that a configured grant resource having a priority higher than that of and overlapping on the time axis with the uplink radio resource does not exist, condition 2) that a dynamic grant resource having a priority higher than that of and overlapping on the time axis with the uplink radio resource does not exist, and condition 3) that a prioritized SR transmission having a priority higher than that of and overlapping on the time axis with the uplink radio resource does not exist are satisfied, the uplink radio resource may be determined as a prioritized uplink radio resource. When the above-described operation of determining whether the uplink radio resource is a prioritized uplink radio resource is not performed on an uplink radio resource determined as a "deprioritized uplink radio resource", that is, when an uplink radio resource is not yet determined as a prioritized uplink radio resource or a deprioritized uplink radio resource, the operation of comparing with the prioritized SR transmission (i.e., condition 3)) is not required.

When operations 1110 to 1130 of FIG. 11 are applied to the resource configuration of FIG. 4, the following prioritization process is performed.
- Because the third uplink radio resource 480 having a priority higher than that of the SR transmission 460 exists, the SR transmission 460 is not determined as a prioritized SR transmission.
- The third uplink radio resource 480 having a highest priority (p=3) from among uplink radio resources and SR transmissions is determined as a prioritized uplink radio resource.
- The second uplink radio resource 470 overlaps on the time axis with and has a priority lower than that of the third uplink radio resource 480, and thus is determined as a deprioritized uplink radio resource.
- The first uplink radio resource 420 does not overlap with any uplink radio resource on the time axis, and thus is determined as a prioritized uplink radio resource.

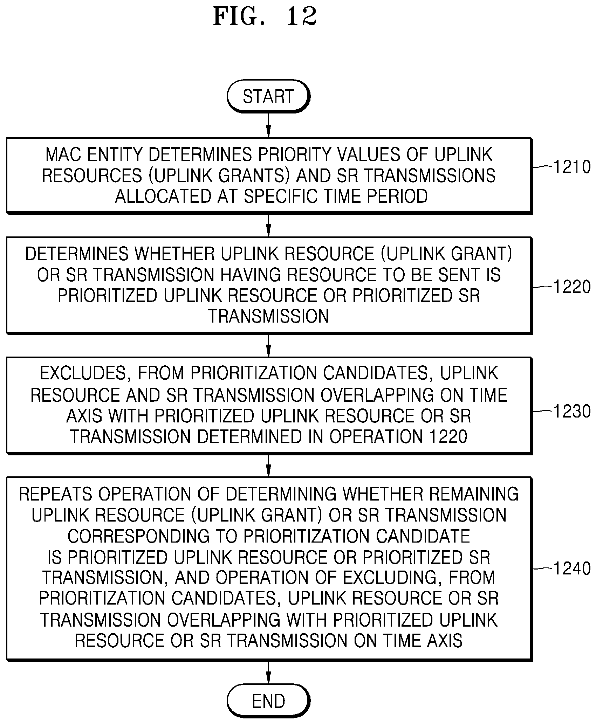

FIG. 12 is a flowchart of a prioritization process according to an embodiment of the disclosure. As described above in relation to FIGS. 3 and 4, a phenomenon in which a deprioritized uplink radio resource or a deprioritized SR configuration resource causes another uplink radio resource to be determined as a deprioritized uplink radio resource not to be transmitted may reduce radio resource efficiency and degrade performance. That is, to solve the phenomenon in which the deprioritized uplink radio resource or the deprioritized SR configuration resource determined in a prioritization process causes another transmittable uplink radio resource to be determined as being unusable, the embodiment of FIG. 12 proposes a method of excluding, from a prioritization process, an uplink radio resource or SR configuration resource having a priority lower than that of a prioritized uplink radio resource or a prioritized SR configuration resource.

In operation 1210, a MAC entity may determine priority values of uplink radio resources (uplink grants) and SR transmissions (i.e., transmissions on triggered SR configuration resources), which are allocated at a specific time period.

According to an embodiment of the disclosure, the MAC entity may be a MAC entity of a UE. The MAC entity is not limited to the above example and may also be a MAC entity of a base station. According to an embodiment of the disclosure, the priority value of each uplink radio resource may be determined using the method described above in relation to FIG. 3 or 4, or another method. For example, the priority value of each SR transmission may be determined as a priority of a logical channel having triggered the SR transmission as described above in relation to FIG. 4, or using another method.

In operation 1210, the MAC entity sets, as prioritization candidates, data or SR transmissions having resources to be sent. According to an embodiment of the disclosure, the specific time period may be a time defined by a wireless communication system, e.g., a frame, a subframe, a slot, or a mini-slot, or a period arbitrarily set by the UE.

In operation 1220, it may be determined whether one of uplink radio resources other than a deprioritized uplink radio resource or SR transmissions other than a deprioritized SR transmission from among uplink radio resources and SR transmissions having resources to be sent is a prioritized uplink radio resource or a prioritized SR transmission. That is, the prioritized uplink radio resource or the prioritized SR transmission may be determined based on priorities of the uplink radio resources and SR transmissions having resources to be sent.

In other words, in operation 1220, the MAC entity may determine whether each uplink radio resource or SR transmission is a prioritized uplink radio resource or a prioritized SR transmission. The MAC entity may determine whether each uplink radio resource or SR transmission is a prioritized uplink radio resource or a prioritized SR transmission, by determining whether another uplink radio resource or a prioritized SR transmission overlapping with the uplink radio resource or the SR transmission on a time axis exists.

In this case, the MAC entity may consider resource overlapping only for uplink radio resources not excluded from the prioritization candidates (i.e., uplink radio resources other than a deprioritized uplink radio resource), and SR transmissions not excluded from the prioritization candidates (i.e., SR transmissions other than a deprioritized SR transmission). Specifically, to determine whether a certain uplink radio resource or SR transmission is a prioritized uplink radio resource or a prioritized SR transmission, the MAC entity may compare priorities of uplink radio resources not excluded from the prioritization candidates and SR transmissions not excluded from the prioritization candidates, from among uplink radio resources overlapping on the time axis in a cell, and SR transmissions overlapping on the time axis in the MAC entity.

Specifically, when the uplink radio resource is a configured grant, and when condition 1) that a configured grant resource having a priority higher than that of and overlapping on the time axis with the uplink radio resource, and not excluded from the prioritization candidates does not exist, condition 2) that a dynamic grant resource having a priority higher than or equal to that of and overlapping on the time axis with the uplink radio resource, and not excluded from the prioritization candidates does not exist, and condition 3) that an SR transmission having a priority higher than that of and overlapping on the time axis with the uplink radio resource, and not excluded from the prioritization candidates does not exist are satisfied, the uplink radio resource may be determined as a prioritized uplink radio resource. Herein, for the configured grant resource, only configured grant resources for a HARQ process in which a configured grant timer is not running may be considered.

When the uplink radio resource is a dynamic grant, and when condition 1) that a configured grant resource having a priority higher than that of and overlapping on the time axis with the uplink radio resource, and not excluded from the prioritization candidates does not exist, condition 2) that a dynamic grant resource having a priority higher than that of and overlapping on the time axis with the uplink radio resource, and not excluded from the prioritization candidates does not exist, and condition 3) that a SR transmission having a priority higher than that of and overlapping on the time axis with the uplink radio resource, and not excluded from the prioritization candidates does not exist are satisfied, the uplink radio resource may be determined as a prioritized uplink radio resource. Herein, for the configured grant resource, only configured grant resources for a HARQ process in which a configured grant timer is not running may be considered.

When an uplink radio resource is excluded from the prioritization candidates, it means that the uplink radio resource is determined as a deprioritized uplink radio resource (deprioritized uplink grant) or is one of configured grant resources using a HARQ process in which a configured grant timer is running. When an SR transmission is excluded from the prioritization candidates, it means that the SR transmission is not determined as a prioritized SR transmission in a process of determining the prioritized SR transmission, or that an SR transmission to be sent does not exist.

In operation 1230, the MAC entity may determine a prioritized uplink radio resource or a prioritized SR transmission and, after the prioritized uplink radio resource or the prioritized SR transmission is determined, an uplink radio resource and SR transmission overlapping on the time axis with the prioritized uplink radio resource or prioritized SR transmission determined in operation 1220 may be excluded from the prioritization candidates.

According to an embodiment of the disclosure, when the prioritized resource is a prioritized uplink radio resource (prioritized uplink grant) to be transmitted in a PUSCH, an uplink radio resource or SR transmission resource overlapping with the prioritized uplink radio resource on the time axis in the same cell or the same BWP may be determined as a deprioritized uplink radio resource or a deprioritized SR transmission.

When the prioritized resource is a prioritized SR transmission to be transmitted in a PUCCH, all uplink radio resources and SR transmission resources overlapping with the prioritized SR transmission on the time axis in the same MAC entity or UE may be determined as deprioritized uplink radio resources or deprioritized SR transmissions. The deprioritized uplink radio resource or deprioritized SR transmission overlapping with the prioritized resource on the time axis may be subsequently excluded from the prioritization candidates.

In operation 1240, the MAC entity may determine whether one of the remaining uplink radio resources and SR transmissions set as the prioritization candidates, i.e., the uplink radio resources and SR transmissions which are not yet determined as deprioritized uplink radio resources or deprioritized SR transmissions, is a prioritized uplink radio resource or a prioritized SR transmission. That is, the prioritized uplink radio resource or the prioritized SR transmission may be determined based on priorities of the uplink radio resources and SR transmissions having resources to be sent. That is, a prioritized uplink radio resource or SR transmission other than the prioritized uplink radio resource or prioritized SR transmission determined in operation 1220 may be determined.

According to an embodiment of the disclosure, as in operation 1230, the MAC entity may repeat the process of excluding, from the prioritization candidates, an uplink radio resource or SR transmission overlapping with the prioritized uplink radio resource or the prioritized SR transmission on the time axis. Thereafter, operation 1240 may be repeated until no more uplink radio resources or SR configuration resources set as the prioritization candidates remain.

When operations 1210 to 1240 of FIG. 12 are applied to the resource configuration shown in FIG. 3, the following prioritization process is performed. The order of selecting resources may vary depending on embodiments, and the result of prioritizing resources may vary accordingly.
- The third uplink radio resource 340 is selected. The third uplink radio resource 340 has a highest priority (p=1) from among SR transmission resources not excluded from the prioritization candidates and overlapping on the time axis configured in the MAC entity, and uplink radio resources not excluded from the prioritization candidates and overlapping on the time axis in the cell, and thus is determined as a prioritized uplink radio resource. The first uplink radio resource 320 overlapping with the third uplink radio resource 340 on the time axis of the cell 1 310 is determined as a deprioritized uplink radio resource, and subsequently excluded from the prioritization process (i.e., excluded from the prioritization candidates).
- The fourth uplink radio resource 360 is selected. The fourth uplink radio resource 360 has a highest priority from among SR transmission resources not excluded from the prioritization candidates and overlapping on the time axis configured in the MAC entity, and uplink radio resources not excluded from the prioritization candidates and overlapping on the time axis in the cell, and thus is determined as a prioritized uplink radio resource. The sixth uplink radio resource 380 and the fifth uplink radio resource 370 overlapping with the fourth uplink radio resource 360 on the time axis of the cell 2 350 are determined as deprioritized uplink radio resources, and subsequently excluded from the prioritization process (i.e., excluded from the prioritization candidates).
- The second uplink radio resource 330, which is the only prioritization candidate at present, is selected. The second uplink radio resource 330 has a highest priority from among SR transmission resources not excluded from the prioritization candidates and overlapping on the time axis configured in the MAC entity, and uplink radio resources not excluded from the prioritization candidates and overlapping on the time axis in the cell, and thus is determined as a prioritized uplink radio resource. The prioritization process is terminated because no more prioritization candidate resources remain.

When operations 1210 to 1240 of FIG. 12 are applied to the resource configuration shown in FIG. 4, the following prioritization process is performed.
- The third uplink radio resource 480 is selected. The third uplink radio resource 480 has a highest priority (p=3) from among SR transmission resources not excluded from the prioritization candidates and overlapping on the time axis configured in the MAC entity, and uplink radio resources not excluded from the prioritization candidates and overlapping on the time axis in the cell, and thus is determined as a prioritized uplink radio resource. The second uplink radio resource 470 and the SR transmission 460 overlapping with the third uplink radio resource 480 on the time axis of the cell 1 410 are respectively determined as a deprioritized uplink radio resource and a deprioritized SR transmission, and subsequently excluded from the prioritization process (i.e., excluded from the prioritization candidates).
- The first uplink radio resource 420, which is the only prioritization candidate at present, is selected. The first uplink radio resource 420 has a highest priority from among SR transmission resources not excluded from the prioritization candidates and overlapping on the time axis configured in the MAC entity, and uplink radio resources not excluded from the prioritization candidates and overlapping on the time axis in the cell, and thus is determined as a prioritized uplink radio resource. The prioritization process is terminated because no more prioritization candidate resources remain.

From which uplink radio resource or SR transmission operations 1220 to 1240 are to be performed may be determined based on rules preset by the UE. For example, operations 1220 to 1240 may be performed in descending order of priority from a high-priority uplink radio resource or SR transmission.

The methods according to the embodiments described in the claims or the specification of the disclosure may be implemented in hardware, software, or a combination of both.

When implemented in software, a computer-readable storage medium storing one or more programs (e.g., software modules) may be provided. The one or more programs stored in the computer-readable storage medium are configured for execution by one or more processors in an electronic device. The one or more programs include instructions directing the electronic device to execute the methods according to the embodiments described in the claims or the specification of the disclosure.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in memory including a combination of some or all of the above-mentioned storage media. Each type of such memory may be provided in a plural number.

In addition, the programs may be stored in an attachable storage device accessible through one or a combination of communication networks such as an internet, an intranet, a local area network (LAN), a wide LAN (WLAN), and a storage area network (SAN). Such a storage device may access, through an external port, a device for implementing the embodiments of the disclosure. An additional storage device on the communication network may also access the device for implementing the embodiments of the disclosure.

In the afore-described embodiments of the disclosure, each element included in the disclosure is expressed in a singular or plural form depending on proposed specific embodiments. However, the singular or plural form is selected properly for a situation assumed for convenience of explanation and does not limit the disclosure, and elements expressed in a plural form may include a single element and an element expressed in a singular form may include a plurality of elements.

## Claims

1. A method performed by a user equipment, UE, in a wireless communication system, the method comprising:
identifying (810), by a medium access control, MAC, entity, a priority of an uplink resource and a priority of at least one other uplink resource;
identifying (820), by the MAC entity, a prioritized resource, based on the priority of the uplink resource and the priority of the at least one other uplink resource; and **characterized by**
identifying (830), by the MAC entity, at least one overlapped uplink resource overlapping in a time domain with the prioritized resource as a de-prioritized resource,
wherein the at least one overlapped uplink resource is excluded from candidates of logical channel based prioritization process.

2. The method of claim 1,
wherein the at least one other uplink resource was not excluded from the candidates of logical channel based prioritization process,
wherein the uplink resource is identified as the prioritized resource in case that there is no the at least one other uplink resource overlapping the uplink resource in the time domain and having a higher priority than the priority of the uplink resource,
wherein the uplink resource corresponds to a dynamic uplink grant, a configured uplink grant, or a resource related to a scheduling request, SR, transmission, and
wherein the at least one other uplink resource corresponds to at least one of the dynamic uplink grant, the configured uplink grant, or the resource related to the SR transmission.

3. The method of claim 1,
wherein the uplink resource corresponds to a dynamic uplink grant, and
wherein the uplink resource is identified as the prioritized resource in case that there is no configured uplink grant which was not excluded from the candidates overlapping the uplink resource and having a higher priority than the priority of the uplink resource, and there is no SR transmission which was not excluded from the candidates overlapping the uplink resource and having a higher priority than the priority of the uplink resource.

4. The method of claim 1,
wherein the uplink resource corresponds to a configured uplink grant, and
wherein the uplink resource is identified as the prioritized resource in case that there is no another configured uplink grant which was not excluded from the candidates overlapping the uplink resource and having a higher priority than the priority of the uplink resource, and there is no dynamic uplink grant which was not excluded from the candidates overlapping the uplink resource and having a priority higher than and equal to the priority of the uplink resource, and there is no SR transmission which was not excluded from the candidates overlapping the uplink resource and having a priority higher than the priority of the uplink resource.

5. The method of claim 1,
wherein the priority of the uplink resource is identified, by the MAC entity, based on priorities of logical channels multiplexed in a MAC protocol data unit, PDU, or priorities of logical channels being available to be multiplexed in the MAC PDU.

6. The method of claim 1,
wherein the prioritized resource is identified based on an order of the priority of the uplink resource.

7. The method of claim 1,
wherein the prioritized resource is identified as a resource corresponding to a highest priority among the uplink resource and the at least one other uplink resource.

8. A user equipment, UE, performed in a wireless communication system, the UE comprising:
a transceiver; and
at least one processor coupled to the transceiver and configured to:
identify (810), by a medium access control, MAC, entity, a priority of an uplink resource and a priority of at least one other uplink resource,
identify (820), by the MAC entity, a prioritized resource, based on the priority of the uplink resource and the priority of the at least one other uplink resource, and
**characterized by** the processor being further configured to:
identify (830), by the MAC entity, at least one overlapped uplink resource overlapping in a time domain with the prioritized resource as a de-prioritized resource,
wherein the at least one overlapped uplink resource is excluded from candidates of logical channel based prioritization process.

9. The UE of claim 8,
wherein the at least one other uplink resource was not excluded from the candidates of logical channel based prioritization process,
wherein the uplink resource is identified as the prioritized resource in case that there is no the at least one other uplink resource overlapping the uplink resource in the time domain and having a higher priority than the priority of the uplink resource,
wherein the uplink resource corresponds to a dynamic uplink grant, a configured uplink grant, or a resource related to a scheduling request, SR, transmission, and
wherein the at least one other uplink resource corresponds to at least one of the dynamic uplink grant, the configured uplink grant, or the resource related to the SR transmission.

10. The UE of claim 8, wherein the uplink resource corresponds to a dynamic uplink grant, and
wherein the uplink resource is identified as the prioritized resource in case that there is no configured uplink grant which was not excluded from the candidates overlapping the uplink resource and having a higher priority than the priority of the uplink resource, and there is no SR transmission which was not excluded from the candidates overlapping the uplink resource and having a higher priority than the priority of the uplink resource.

11. The UE of claim 8, wherein the uplink resource corresponds to a configured uplink grant, and
wherein the uplink resource is identified as the prioritized resource in case that there is no another configured uplink grant which was not excluded from the candidates overlapping the uplink resource and having a higher priority than the priority of the uplink resource, and there is no dynamic uplink grant which was not excluded from the candidates overlapping the uplink resource and having a priority higher than and equal to the priority of the uplink resource, and there is no SR transmission which was not excluded from the candidates overlapping the uplink resource and having a priority higher than the priority of the uplink resource.

12. The UE of claim 8, wherein the priority of the uplink resource is identified, by the MAC entity, based priorities of logical channels multiplexed in a MAC protocol data unit, PDU, or priorities of logical channels being available to be multiplexed in the MAC PDU.

13. The UE of claim 8, wherein the prioritized resource is identified based on an order of the priority of the uplink resource, and
wherein the prioritized resource is identified as a resource corresponding to a highest priority among the uplink resource and the at least one other uplink resource.

## Patentansprüche

1. Verfahren, das von einem Benutzergerät, UE, in einem drahtlosen Kommunikationssystem ausgeführt wird, wobei das Verfahren Folgendes umfasst:
Identifizieren (810) einer Priorität einer Uplink-Ressource und einer Priorität von mindestens einer anderen Uplink-Ressource durch eine Medium Access Control(MAC)-Entität;
Identifizieren (820) einer priorisierten Ressource basierend auf der Priorität der Uplink-Ressource und der Priorität der mindestens einen anderen Uplink-Ressource durch die MAC-Entität; und **gekennzeichnet durch** Folgendes:
Identifizieren (830) mindestens einer überlappenden Uplink-Ressource, die in einem Zeitbereich mit der priorisierten Ressource überlappt, durch die MAC-Entität als depriorisierte Ressource,
wobei die mindestens eine überlappende Uplink-Ressource von Kandidaten des auf logischen Kanälen basierenden Priorisierungsprozesses ausgeschlossen wird.

2. Verfahren nach Anspruch 1,
wobei die mindestens eine andere Uplink-Ressource nicht von den Kandidaten des auf logischen Kanälen basierenden Priorisierungsprozesses ausgeschlossen wurde,
wobei die Uplink-Ressource als priorisierte Ressource identifiziert wird, falls es keine mindestens eine andere Uplink-Ressource gibt, die die Uplink-Ressource in dem Zeitbereich überlappt und eine höhere Priorität als die Priorität der Uplink-Ressource hat,
wobei die Uplink-Ressource einer dynamischen Uplink-Gewährung, einer konfigurierten Uplink-Gewährung oder einer Ressource in Bezug auf eine Planungsanforderungs(SR)-Übertragung entspricht, und
wobei die mindestens eine andere Uplink-Ressource der dynamischen Uplink-Gewährung, der konfigurierten Uplink-Gewährung und/oder der Ressource in Bezug auf die SR-Übertragung entspricht.

3. Verfahren nach Anspruch 1,
wobei die Uplink-Ressource einer dynamischen Uplink-Gewährung entspricht, und
wobei die Uplink-Ressource als priorisierte Ressource identifiziert wird, falls es keine konfigurierte Uplink-Gewährung gibt, die nicht von den Kandidaten ausgeschlossen wurde, die die Uplink-Ressource überlappen und eine höhere Priorität als die Priorität der Uplink-Ressource haben, und es keine SR-Übertragung gibt, die nicht von den Kandidaten ausgeschlossen wurde, die die Uplink-Ressource überlappen und eine höhere Priorität als die Priorität der Uplink-Ressource haben.

4. Verfahren nach Anspruch 1,
wobei die Uplink-Ressource einer konfigurierten Uplink-Gewährung entspricht, und
wobei die Uplink-Ressource als priorisierte Ressource identifiziert wird, falls es keine andere konfigurierte Uplink-Gewährung gibt, die nicht von den Kandidaten ausgeschlossen wurde, die die Uplink-Ressource überlappen und eine höhere Priorität als die Priorität der Uplink-Ressource haben, und es keine dynamische Uplink-Gewährung gibt, die nicht von den Kandidaten ausgeschlossen wurde, die die Uplink-Ressource überlappen und eine Priorität haben, die höher als und gleich der Priorität der Uplink-Ressource ist, und es keine SR-Übertragung gibt, die nicht von den Kandidaten ausgeschlossen wurde, die die Uplink-Ressource überlappen und eine höhere Priorität als die Priorität der Uplink-Ressource haben.

5. Verfahren nach Anspruch 1,
wobei die Priorität der Uplink-Ressource basierend auf Prioritäten der in einer MAC-Protokolldateneinheit, PDU, gemultiplexten logischen Kanäle oder Prioritäten der für das Multiplexen in der MAC-PDU verfügbaren logischen Kanäle von der MAC-Entität identifiziert wird.

6. Verfahren nach Anspruch 1,
wobei die priorisierte Ressource basierend auf einer Prioritätsreihenfolge der Uplink-Ressource identifiziert wird.

7. Verfahren nach Anspruch 1,
wobei die priorisierte Ressource als eine Ressource identifiziert wird, die einer höchsten Priorität unter der Uplink-Ressource und der mindestens einen anderen Uplink-Ressource entspricht.

8. Benutzergerät, UE, das in einem drahtlosen Kommunikationssystem ausgeführt wird, wobei das UE Folgendes umfasst:
einen Transceiver; und
mindestens einen Prozessor, der mit dem Transceiver gekoppelt und zu Folgendem konfiguriert ist:
Identifizieren (810) einer Priorität einer Uplink-Ressource und einer Priorität mindestens einer anderen Uplink-Ressource durch eine Medium Access Control(MAC)-Entität,
Identifizieren (820) einer priorisierten Ressource basierend auf der Priorität der Uplink-Ressource und der Priorität der mindestens einen anderen Uplink-Ressource durch die MAC-Entität, und
**dadurch gekennzeichnet, dass** der Prozessor ferner zu Folgendem konfiguriert ist:
Identifizieren mindestens einer überlappenden Uplink-Ressource, die in einem Zeitbereich mit der priorisierten Ressource überlappt, durch die MAC-Entität als depriorisierte Ressource,
wobei die mindestens eine überlappende Uplink-Ressource von Kandidaten des auf logischen Kanälen basierenden Priorisierungsprozesses ausgeschlossen wird.

9. UE nach Anspruch 8,
wobei die mindestens eine andere Uplink-Ressource nicht von den Kandidaten des auf logischen Kanälen basierenden Priorisierungsprozesses ausgeschlossen wurde,
wobei die Uplink-Ressource als priorisierte Ressource identifiziert wird, falls es keine mindestens eine andere Uplink-Ressource gibt, die die Uplink-Ressource in dem Zeitbereich überlappt und eine höhere Priorität als die Priorität der Uplink-Ressource hat,
wobei die Uplink-Ressource einer dynamischen Uplink-Gewährung, einer konfigurierten Uplink-Gewährung oder einer Ressource in Bezug auf eine Planungsanforderungs(SR)-Übertragung entspricht, und
wobei die mindestens eine andere Uplink-Ressource der dynamischen Uplink-Gewährung, der konfigurierten Uplink-Gewährung und/oder der Ressource in Bezug auf die SR-Übertragung entspricht.

10. UE nach Anspruch 8, wobei die Uplink-Ressource einer dynamischen Uplink-Gewährung entspricht, und
wobei die Uplink-Ressource als priorisierte Ressource identifiziert wird, falls es keine konfigurierte Uplink-Gewährung gibt, die nicht von den Kandidaten ausgeschlossen wurde, die die Uplink-Ressource überlappen und eine höhere Priorität als die Priorität der Uplink-Ressource haben, und es keine SR-Übertragung gibt, die nicht von den Kandidaten ausgeschlossen wurde, die die Uplink-Ressource überlappen und eine höhere Priorität als die Priorität der Uplink-Ressource haben.

11. UE nach Anspruch 8, wobei die Uplink-Ressource einer konfigurierten Uplink-Gewährung entspricht, und
wobei die Uplink-Ressource als priorisierte Ressource identifiziert wird, falls es keine andere konfigurierte Uplink-Gewährung gibt, die nicht von den Kandidaten ausgeschlossen wurde, die die Uplink-Ressource überlappen und eine höhere Priorität als die Priorität der Uplink-Ressource haben, und es keine dynamische Uplink-Gewährung gibt, die nicht von den Kandidaten ausgeschlossen wurde, die die Uplink-Ressource überlappen und eine Priorität haben, die höher als und gleich der Priorität der Uplink-Ressource ist, und es keine SR-Übertragung gibt, die nicht von den Kandidaten ausgeschlossen wurde, die die Uplink-Ressource überlappen und eine höhere Priorität als die Priorität der Uplink-Ressource haben.

12. UE nach Anspruch 8, wobei die Priorität der Uplink-Ressource basierend auf den Prioritäten der in einer MAC-Protokolldateneinheit, PDU, gemultiplexten logischen Kanäle oder den Prioritäten der zum Multiplexen in der MAC-PDU verfügbaren logischen Kanäle durch die MAC-Entität identifiziert wird.

13. UE nach Anspruch 8, wobei die priorisierte Ressource basierend auf einer Prioritätsreihenfolge der Uplink-Ressource identifiziert wird, und
wobei die priorisierte Ressource als eine Ressource identifiziert wird, die einer höchsten Priorität unter der Uplink-Ressource und der mindestens einen anderen Uplink-Ressource entspricht.

## Revendications

1. Procédé effectué par un équipement utilisateur, UE, dans un système de communication sans fil, le procédé comprenant :
l'identification (810), par une entité de contrôle d'accès au support, MAC, d'une priorité d'une ressource de liaison montante et d'une priorité d'au moins une autre ressource de liaison montante ;
l'identification (820), par l'entité de MAC, d'une ressource priorisée, sur la base de la priorité de la ressource de liaison montante et de la priorité de l'au moins une autre ressource de liaison montante ; et **caractérisé par**
l'identification (830), par l'entité de MAC, d'au moins une ressource de liaison montante chevauchée se chevauchant dans un domaine temporel avec la ressource priorisée en tant que ressource dépriorisée,
où l'au moins une ressource de liaison montante chevauchée est exclue des candidats du processus de priorisation basé sur le canal logique.

2. Procédé selon la revendication 1,
où l'au moins une autre ressource de liaison montante n'a pas été exclue des candidats du processus de priorisation basé sur le canal logique,
où la ressource de liaison montante est identifiée comme la ressource priorisée dans le cas où il n'y a pas l'au moins une autre ressource de liaison montante chevauchant la ressource de liaison montante dans le domaine temporel et ayant une priorité supérieure à la priorité de la ressource de liaison montante,
où la ressource de liaison montante correspond à une autorisation de liaison montante dynamique, une autorisation de liaison montante configurée, ou une ressource liée à une transmission de demande de planification, SR, et
où l'au moins une autre ressource de liaison montante correspond à au moins l'une parmi l'autorisation de liaison montante dynamique, l'autorisation de liaison montante configurée ou la ressource liée à la transmission de SR.

3. Procédé selon la revendication 1,
où la ressource de liaison montante correspond à une autorisation de liaison montante dynamique, et
où la ressource de liaison montante est identifiée comme la ressource priorisée dans le cas où il n'y a pas d'autorisation de liaison montante configurée qui n'ait été exclue des candidats chevauchant la ressource de liaison montante et ayant une priorité supérieure à la priorité de la ressource de liaison montante, et il n'y a pas de transmission de SR qui n'ait été exclue des candidats chevauchant la ressource de liaison montante et ayant une priorité supérieure à la priorité de la ressource de liaison montante.

4. Procédé selon la revendication 1,
où la ressource de liaison montante correspond à une autorisation de liaison montante configurée, et
où la ressource de liaison montante est identifiée comme la ressource priorisée dans le cas où il n'y a pas d'autre autorisation de liaison montante configurée qui n'ait pas été exclue des candidats chevauchant la ressource de liaison montante et ayant une priorité supérieure à la priorité de la ressource de liaison montante, et il n'y a pas d'autorisation de liaison montante dynamique qui n'ait pas été exclue des candidats chevauchant la ressource de liaison montante et ayant une priorité supérieure ou égale à la priorité de la ressource de liaison montante, et il n'y a pas de transmission de SR qui n'ait pas été exclue des candidats chevauchant la ressource de liaison montante et ayant une priorité supérieure à la priorité de la ressource de liaison montante.

5. Procédé selon la revendication 1,
où la priorité de la ressource de liaison montante est identifiée, par l'entité de MAC, sur la base de priorités de canaux logiques multiplexés dans une unité de données de protocole, PDU, MAC ou de priorités de canaux logiques étant disponibles pour être multiplexés dans la PDU MAC.

6. Procédé selon la revendication 1,
où la ressource priorisée est identifiée sur la base d'un ordre de la priorité de la ressource de liaison montante.

7. Procédé selon la revendication 1,
où la ressource priorisée est identifiée comme une ressource correspondant à la priorité la plus élevée parmi la ressource de liaison montante et l'au moins une autre ressource de liaison montante.

8. Équipement utilisateur, UE, effectué dans un système de communication sans fil, l'UE comprenant :
un émetteur-récepteur ; et
au moins un processeur couplé à l'émetteur-récepteur et configuré pour :
identifier (810), par une entité de contrôle d'accès au support, MAC, une priorité d'une ressource de liaison montante et une priorité d'au moins une autre ressource de liaison montante,
identifier (820), par l'entité de MAC, une ressource priorisée, sur la base de la priorité de la ressource de liaison montante et de la priorité de l'au moins une autre ressource de liaison montante, et
**caractérisé en ce que** le processeur est en outre configuré pour :
identifier (830), par l'entité de MAC, au moins une ressource de liaison montante chevauchée se chevauchant dans un domaine temporel avec la ressource priorisée en tant que ressource dépriorisée,
où l'au moins une ressource de liaison montante chevauchée est exclue des candidats du processus de priorisation basé sur le canal logique.

9. UE selon la revendication 8,
où l'au moins une autre ressource de liaison montante n'a pas été exclue des candidats du processus de hiérarchisation basé sur le canal logique,
où la ressource de liaison montante est identifiée comme la ressource priorisée dans le cas où il n'y a pas l'au moins une autre ressource de liaison montante chevauchant la ressource de liaison montante dans le domaine temporel et ayant une priorité supérieure à la priorité de la ressource de liaison montante,
où la ressource de liaison montante correspond à une autorisation de liaison montante dynamique, une autorisation de liaison montante configurée, ou une ressource liée à une transmission de demande de planification, SR, et
où l'au moins une autre ressource de liaison montante correspond à au moins l'une parmi l'autorisation de liaison montante dynamique, l'autorisation de liaison montante configurée, ou la ressource liée à la transmission de SR.

10. UE selon la revendication 8, où la ressource de liaison montante correspond à une autorisation de liaison montante dynamique, et
où la ressource de liaison montante est identifiée comme la ressource priorisée dans le cas où il n'y a pas d'autorisation de liaison montante configurée qui n'ait pas été exclue des candidats chevauchant la ressource de liaison montante et ayant une priorité supérieure à la priorité de la ressource de liaison montante, et il n'y a pas de transmission de SR qui n'ait pas été exclue des candidats chevauchant la ressource de liaison montante et ayant une priorité supérieure à la priorité de la ressource de liaison montante.

11. UE selon la revendication 8, où la ressource de liaison montante correspond à une autorisation de liaison montante configurée, et
où la ressource de liaison montante est identifiée comme la ressource priorisée dans le cas où il n'y a pas d'autre autorisation de liaison montante configurée qui n'ait pas été exclue des candidats chevauchant la ressource de liaison montante et ayant une priorité supérieure à la priorité de la ressource de liaison montante, et il n'y a pas d'autorisation de liaison montante dynamique qui n'ait pas été exclue des candidats chevauchant la ressource de liaison montante et ayant une priorité supérieure ou égale à la priorité de la ressource de liaison montante, et il n'y a pas de transmission de SR qui n'ait pas été exclue des candidats chevauchant la ressource de liaison montante et ayant une priorité supérieure à la priorité de la ressource de liaison montante.

12. UE selon la revendication 8, où la priorité de la ressource de liaison montante est identifiée, par l'entité de MAC, sur la base de priorités de canaux logiques multiplexés dans une unité de données de protocole, PDU, MAC ou de priorités de canaux logiques étant disponibles pour être multiplexés dans la PDU MAC.

13. UE selon la revendication 8, où la ressource priorisée est identifiée sur la base d'un ordre de la priorité de la ressource de liaison montante, et
où la ressource priorisée est identifiée comme une ressource correspondant à la priorité la plus élevée parmi la ressource de liaison montante et l'au moins une autre ressource de liaison montante.
